# EUROPÄISCHE PATENTSCHRIFT

(11) **EP 1 064 178 B1**
(45) Veröffentlichungstag und Bekanntmachung des Hinweises auf die Patenterteilung: **11.09.2002**
(21) Anmeldenummer: 99913270.7
(22) Anmeldetag: 17.03.1999
(51) Int. Cl.: B60R 25/10, G08B 25/01

(54) **MOBILES SICHERHEITSINFORMATIONSSYSTEM**
MOBILE SECURITY INFORMATION SYSTEM
SYSTEME MOBILE POUR INFORMATIONS RELATIVES A LA SECURITE

(30) Priorität: 18.03.1998 WO PCT/EP98/01565
(43) Veröffentlichungstag der Anmeldung: 03.01.2001
(73) Patentinhaber: Marquardt, Gerd, 68163 Mannheim (DE); Fassoth, Heinrich, 68623 Lampertheim (DE)
(72) Erfinder: Marquardt, Gerd, 68163 Mannheim (DE); Fassoth, Heinrich, 68623 Lampertheim (DE)
(74) Vertreter: Mierswa, Klaus
(86) Internationale Anmeldenummer: EP9901777
(87) Internationale Veröffentlichungsnummer: WO99047394

(56) Entgegenhaltungen:
- EP-A- 0 366 378
- EP-A- 0 639 486
- EP-A- 0 652 542
- FR-A- 2 752 980
- US-A- 4 067 411
- US-A- 5 218 367
- US-A- 5 223 844
- US-A- 5 247 564

## Beschreibung

### Technisches Gebiet:

Die Erfindung betrifft ein mobiles Sicherheitsinformationssystem, das einen Empfänger zur Detektion wenigstens einer Startbedingung, eine Systemsteuerung, eine Sendestation mit Selbstwähleinheit zur Teilnahme an GSM-Kommunikation (Global System for Mobile Communications), sowie eine Aufnahmeeinheit und einen Sprachspeicher , nämlich Tonband oder Voice-Chip, aufweist, wobei der Empfänger einen auslösenden Impuls detektiert und daraufhin die Systemsteuerung aktiviert, welche ein dem auslösenden Impuls entsprechendes Übertragungsprogramm startet, bestehend aus automatischer Anwahl wenigstens einer einprogrammierten Rufnummer durch die Sendestation und nach Verbindungsherstellung Übermittlung von Signalen, wie Piepton oder gespeicherter Ansagetext, die dem auslösenden Impuls entsprechen, an die entsprechende Empfangsstation, und eines ortsabhängigen Positionssignals sowie Freischaltung der Verbindung zur Übermittlung von zu diesem Zeitpunkt im Bereich des Sicherheitsinformationssystems erzeugten akustischen Signalen an die Empfangsstation, wobei diese Signale von der Aufnahmeeinheit empfangen und über die Sendestation an die Empfangsstation gesendet werden, gemäß dem Oberbegriff des Anspruchs 1.

### Stand der Technik:

Es sind verschiedene Sicherheitsinformationssysteme, insbesondere für Kraftfahrzeuge und andere bewegliche Gegenstände, bekannt, die alle auf dem Prinzip beruhen, daß nach Eintreten einer bestimmten Alarmbedingung bzw. bei Vorliegen eines auslösenden Impulses ein Selbstwählmechanismus aktiviert wird, welcher über ein Mobiltelefon eine Verbindung mit einer Empfangsstation herstellt und dieser ein Signal übermittelt.

Durch GB 2191365 A ist ein Sicherheitsinformationssystem bekannt, welches als Signal eine zweiteilige Botschaft übermittelt, welche in einem ersten, fest gespeicherten Teil den entsprechenden Gegenstand, z.B. das Kraftfahrzeug, und im zweiten Teil variable, vom Benutzer eingebbare Information über den Ort des Gegenstands übermittelt.

Durch die DE 3839959 A1 ist eine Notrufeinrichtung für ein Fahrzeug bekannt geworden, die beim Auftreten einer Gefahr oder eines Unfalls einen automatischen Notruf mit Angabe der Fahrzeugposition und der Anzahl der Fahrzeuginsassen sendet, der in einer Meldestation auf einem Display lesbar oder über Lautsprecher ausgebbar ist. Als Alarmbedingung bzw. auslösende Impulse dienen verschiedene Fahrzeugsysteme, z.B. Airbagsystem oder Diebstahls-Alarmanlage oder Temperatursensoren und Fahrzeugkontrollgeräte. Die Fahrzeugposition wird durch ein mitgeführtes Ortungs-/Navigationsgerät ermittelt, Peilungen sind nicht erforderlich.

Als Sicherheitsinformationssysteme für Personen sind beispielsweise Notrufschalter in Krankenhäusern, an Autobahnen oder in Banken bekannt, die von einer Bedienungsperson manuell betätigt werden und in einer Zentrale ein Alarmsignal auslösen, wobei das Signal in der Zentrale dem Ort des Notfalls zugeordnet wird. Teilweise ist eine zweiseitige Kommunikation zwischen der Notrufstation bzw. dem Sicherheitsinformationssystem und einer Empfangsstation möglich. Weiterhin sind Baby-Überwachungsanlagen bekannt, mit denen eine einseitige Kommunikation möglich ist, d.h. ein Abhören aller am Ort der Überwachungsanlage abgegebenen Laute mit einer Empfangsstation. Die Übertragung derartiger Signale erfolgt netzgebunden z.B. über das Stromnetz oder ein separates Kommunikationsnetz.

Durch die DE 42 39 787 A1 ist eine Diebstahlssicherung für Kraftfahrzeuge bekannt geworden für den grenzüberschreitenden Verkehr. Die Diebstahlsicherung besteht aus einer Sendeeinheit, die in ein Kraftfahrzeug eingebaut ist und die ein Signal aussendet, das eine alphanumerische Ziffernfolge darstellt sowie aus einer Empfangseinheit, die das von der Sendeeinheit ausgesandte Signal detektiert, decodiert und an eine Auswerteeinheit weiterleitet, wodurch die Detektion eines bereits gestohlenen Kraftfahrzeuges ermöglicht werden soll.

Durch die DE 43 20 849 A1 ist eine weitere Überwachungsvorrichtung für Fahrzeuge bekannt geworden, bei der nach Ansprechen einer Auslösevorrichtung eine einem vorgegebenen Datensatz entsprechende Sprachsignalfolge diesem automatisch zugeordnet und von einer Sendevorrichtung als Überwachungssignal abgesetzt wird. Der Datensatz umfaßt die Position, den Typ, die Fahrgestellnummer und Farbe des Fahrzeugs sowie die Uhrzeit des Ansprechens der Auslösevorrichtung.

Durch die US-PS 4,067,411 ist ein Fahrzeugüberwachungssystem der eingangs genannten Gattung bekannt geworden, welches die unauthorisierte Benutzung eines entfernten Fahrzeugs festzustellen und an eine Notstation mittels drahtloser Funkübertragung zu melden imstande ist. Das vom Fahrzeug abgestrahlte Notrufsignal enthält Merkmale über das Fahrzeug sowie über die Notrufsituation. Die Notstation identifiziert das Fahrzeug und strahlt einen Sendeimpulse ab, der vom Fahrzeug empfangen und umgesetzt wird, wobei als Reaktion die Fahrt des Fahrzeugs verzögert oder das Fahrzeug gestoppt wird.

Nachteilig am Stand der Technik ist die Unflexibilität herkömmlicher Sicherheitsinformationssysteme. Die Art des Sicherheitsinformationssystems richtet sich nach dem, was überwacht werden oder einen Notruf auslösen können soll. Das Übertragungsprogramm zur Übertragung eines Notrufs läuft weitestgehend unabhängig von der Art der Auslösung des Alarms ab. Beispielsweise wird bei den Auto-Notrufsystemen unabhängig davon, ob der Alarm durch Unfall oder durch Auslösen der Diebstahlsicherung ausgelöst wurde, stets die gleiche Rufnummer oder die gleiche Gruppe von Rufnummern automatisch angewählt, insbesondere die Polizei oder eine zentrale Alarm-Empfangsstelle, welche speziell dafür eingerichtet und unterhalten werden muß. Dies kann je nach Ursache des Alarms unangemessen und nicht zweckmäßig sein. Die Differenzierung des Alarmauslösers erfolgt gegebenenfalls erst durch die Übermittlung des Signals selbst, falls es den Alarmauslöser automatisch nennt.

Ein weiterer Nachteil gegenwärtig bekannter Sicherheitsinformationssysteme ist, daß derartige Geräte stets eingeschaltet sein oder sich in einem Stand-By-Modus befinden müssen. Sie sind daher stets an eine Strom-/Spannungsversorgung gekoppelt, z.B. an das Stromnetz, einen Akku oder eine Batterie. Bei Stromversorgung über das Stromnetz ist die Mobilität des Sicherheitsinformationssystems nicht gegeben, bei Stromversorgung durch eine mitgeführte Stromquelle wird diese beständig entladen, so daß das Sicherheitsinformationssystem möglicherweise im entscheidenden Moment nicht funktionstüchtig ist. Nachteilig an einer derartigen Betriebsweise ist außerdem, daß das Sicherheitsinformationssystem im Ruhezustand Strahlung aussendet und somit schon vor Eingang eines auslösenden Impulses zu orten ist.

### Technische Aufgabe:

Der Erfindung liegt die Aufgabe zugrunde, ein universell einsetzbares Sicherheitsinformationssystem zu schaffen, welches sowohl zur Überwachung von Personen bzw. zur Notrufauslösung durch Personen als auch zur Überwachung von beweglichen Gegenständen, wie Kraftfahrzeugen oder Schiffen, sowie zur Notrufauslösung und gegebenenfalls Ortung bei Unfällen und Diebstahl geeignet ist; wobei das Sicherheitsinformationssystem leicht zu handhaben und wartungsarm sein soll, so daß es jederzeit und überall einsetzbar ist.

### Offenbarung der Erfindung und deren Vorteile:

Die Aufgabe wird dadurch gelöst, dass das Sicherheitsinformationssystem zur Teilnahme an GSM-Kommunikation (Global System for Mobile Communications) ausgelegt ist und die Sendestation GSM-spezifische oder Inmarsat-C-spezifische Hardware enthält, wobei die Sendestation mobiltelefonähnlich aufgebaut ist und mittels einer in das Sicherheitsinformationssystem einsteckbaren Mobiltelefonkarte mit entsprechender Software, z.B. SIM-Karte, an der GSM-Kommunikation teilnimmt und dass der Empfänger eine Mehrzahl von Eingangskanälen für verschiedenartige Impulse aufweist, so dass er eine Mehrzahl von Startbedingungen in Form von unterschiedlichen auslösenden Impulsen zu unterscheiden imstande ist, wobei der Systemsteuerung eine Mehrzahl von Übertragungsprogrammen zur Verfügung steht, welche vom Benutzer einem auslösenden Impuls bzw. einem der Eingangskanäle zugeordnet werden und durch Eingabe einer oder mehrerer Rufnummern sowie eines Ansagetextes beliebig oft modifizierbar sind. Weitere vorteilhafte Weiterbildungen der Erfindung sind in den Unteransprüchen gekennzeichnet.

Das erfindungsgemäße Sicherheitsinformationssystem ist universell einsetzbar, da auslösender Impuls prinzipiell jedes beliebige Signal sein kann, sofern das Gerät einen dafür geeigneten Sensor oder einen geeigneten Eingangskanal aufweist. Einfachste Realisierung ist eine Einsteckbuchse für elektrische Kontakte, welche z.B. mit der Auto-Alarmanlage, aber auch mit der Airbag-Anlage verbunden werden kann, so daß deren Auslösung bei Diebstahl bzw. Unfall auch die Aktivierung des Sicherheitsinformationssystems bewirkt.

Weiterhin einfach zu realisieren ist ein mechanischer Schalter, durch dessen Betätigung ein Notruf eingeleitet wird. Dies ist neben der Verwendung in Kraftfahrzeugen besonders für Personen von Vorteil, die sich in unsicheren oder gefährlichen Situationen befinden oder möglicherweise in Gefahr geraten könnten. Darunter fallen beispielsweise ältere Menschen, die somit bei einem Schwächeanfall per Tastendruck schnell ihre Angehörigen oder ihren Arzt benachrichtigen können, oder Bergsteiger, die einen Unfall haben.

Jedes andere Signal kann jedoch ebenso zur Aktivierung des Systems verwendet werden, z.B. ein akustisches Signal zur Verwendung des Sicherheitsinformationssystems als Baby-Überwachungsanlage.

Vorzugsweise ist das Sicherheitsinformationssystem im Ruhezustand völlig ausgeschaltet ist und verbraucht keinen Strom. Die Stromquelle, meist ein Akku oder eine Batterie, wird dann nicht belastet, so daß das Gerät stets einsatzbereit ist. Im Falle des Einsatzes in einem für längere Zeit geparkten Kraftfahrzeug, z.B. während einer Geschäftsreise am Flughafen, ist folgender Fall ausgeschlossen, daß ein an die Autobatterie angeschlossenes Sicherheitsinformationssystem die Batterie entlädt, so daß letztendlich weder das Auto funktionstüchtig noch eine wirkungsvolle Diebstahlüberwachung möglich ist. Die Erfindung verwendet ein zunächst beliebiges, aber einstellbares Signal oder eine Mehrzahl derartiger Signale, um das Sicherheitsinformationssystem, bzw. dessen Systemsteuerung zu aktivieren. Erst nach Eingang eines solchen Signals und für die Dauer des Übertragungsprogramms verbraucht das Gerät Strom.

Der eingehende Impuls wird vorzugsweise über einen Mikrochip verarbeitet und aktiviert die Systemsteuerung, die die Sendestation veranlaßt, automatisch einen Wählvorgang mit einer eingespeicherten Rufnummer zu initiieren. In der Systemsteuerung oder in der Sendestation ist GSM-spezifische Hardware installiert, so daß die Sendestation zur Teilnahme an GSM-Kommunikation imstande ist, die den großen Vorteil hat, daß das Sicherheitsinformationssystem einfach zu realisieren und prinzipiell überall einsetzbar ist, wo ausreichende Mobiltelefon-Kommunikationsmöglichkeiten vorhanden sind.

Das Sicherheitsinformationssystem ist somit mobiltelefonähnlich aufgebaut, gegebenenfalls sogar in einem Mobiltelefon integriert, und wird zur Teilnahme an GSM-Kommunikation dadurch befähigt, daß eine Mobiltelefonkarte mit entsprechende Software, z.B. eine weltweit gebräuchliche SIM-Karte, in das Sicherheitsinformationssystem eingesteckt wird. Diese Karte läßt sich jederzeit herausnehmen und auch für ein gewöhnliches Mobiltelefon nutzen, so daß sie je nach Bedürfnis eingesetzt werden kann.

Der Empfänger ist imstande, eine Mehrzahl von auslösenden Impulsen zu unterscheiden. Dazu weist das Sicherheitsinformationssystem eine Mehrzahl von Eingangskanälen auf, die verschiedenartige auslösende Impulse, z.B. manuelle Betätigung, akustische/optische/Infrarot-Signale oder Spannungspulse, empfangen können, z.B. Taster, akustische, optische und/oder Infrarot-Sensoren und/oder Einsteckbuchsen für elektrische Kontakte. Je nach Eingangskanal startet die Systemsteuerung ein diesem zugeordnetes Übertragungsprogramm. Diese Übertragungsprogramme unterscheiden sich z.B. durch die zuerst gewählte Rufnummer, den Ansagetext und die Möglichkeit und gegebenenfalls Dauer einer ein- oder zweiseitigen Kommunikation. Die einzelnen Parameter des Übertragungsprogramms sind vom Benutzer einstellbar und beliebig oft modifizierbar. Vorzugsweise ist dazu eine einfache Menüsteuerung vorhanden.

Beispiel: Ein Sicherheitsinformationssystem ist in einem Auto installiert und verwendet als auslösende Impulse die Diebstahlsicherung, die Auslösung des Airbags und einen manuellen Schalter. Im Falle eines Diebstahls ruft das Sicherheitsinformationssystem z.B. den Besitzer des Wagens an und übermittelt diesem die vorher aufgezeichnete Nachricht, daß die Diebstahlsicherung ausgelöst wurde. Eine Rücksprache oder ein Abhören der Geräusche im Bereich des Geräts ist nicht nötig und daher im Übertragungsprogramm nicht vorgesehen. Der Besitzer des Wagens kann selbst entscheiden, welche Schritte er nun einleitet. Im Falle eines Auslösen des Airbags ruft das Sicherheitsinformationssystem beispielsweise bei der Polizei an und übermittelt Informationen über den Fahrzeugtyp, das Vorliegen eines Unfalls, gegebenenfalls den Ort. Dann wird die Verbindung zur ein- oder zweiseitigen Kommunikation freigeschaltet, so daß Fahrzeuginsassen nähere Information geben können. Ähnlich wird bei manuell ausgelöstem Notruf verfahren.

Ein weiteres Beispiel ist die Verwendung des erfindungsgemäßen Systems als Notrufstation für ältere oder kranke Menschen: Die Eingangskanäle können dazu mit verschiedenen Tasten angesprochen werden, worauf wiederum unterschiedliche Übertragungsprogramme gestartet werden. Im Fall eines leichten Schwächeanfalls (Taste 1) können z.B. Verwandte oder Nachbarn angerufen werden, diesen ein Ansagetext mit der Bitte um Hilfe vorgespielt werden und danach die Verbindung für eine zweiseitige Kommunikation, z.B. für Rückfragen, feigegeben werden. Bei einem ernsteren Schwächeanfall (Taste 2) kann in einem ersten Anruf direkt der Arzt alarmiert werden, dem dann nur ein Ansagetext mit der Bitte um sofortigen Besuch beim Patienten vorgespielt wird, gegebenenfalls auch mit Rücksprachemöglichkeit, und dann während desselben Übertragungsprogramms ein zweiter Anruf an Verwandte oder sonstige Bezugspersonen erfolgen.

Weiterhin lassen sich durch das Sicherheitsinformationssystem weitere auslösende Impulse wie Leckage, Überhitzung oder Ausfall von Systemen mit eigenen Zielrufnummern bzw. Warnmeldungen bei einer Zentrale belegen, so daß komplexe Geräte effektiv und kostengünstig fernüberwacht werden können.

Vorzugsweise ist der Ablauf des Übertragungsprogramms von der Empfangsstation modifizierbar, indem an der Empfangsstation z.B. durch Wahltastendruck ein Steuersignal erzeugt und während der bestehenden Verbindung zum Sicherheitsinformationssystem übertragen wird. Dieses Steuersignal ändert dann temporär den Ablauf des Übertragungsprogramms, so daß beispielsweise der Ansagetext wiederholt wird, der Abbruch des Übertragungsprogramms verhindert oder die Verbindung für eine direkte Sprechverbindung freigeschaltet wird. So kann das Übertragungsprogramm und damit die Funktionsweise des Sicherheitsinformationssystems an die aktuelle Situation angepaßt werden.

Vorteilhaft ist auch, wenn das Sicherheitsinformationssystem von einem beliebigen Telefonanschluß anrufbar ist, wobei - vorzusweise nach Codeeingabe - der Zustand eines oder mehrerer Empfangskanäle abfragbar ist und/oder eine ein- oder zweiseitige direkte Kommunikation zwischen Sende- und Empfangsstation möglich ist. Dies ist insbesondere zur Fernüberwachung, z.B. von Babys oder - falls das Sicherheitsinformationssystem mit einem GPS-Sensor und entsprechender Sendevorrichtung für die Positionsdaten ausgerüstet ist - von beweglichen Gegenständen von Vorteil. In diesem Fall wird die Informationsübermittlung nicht von dem Sicherheitsinformationssystem selbst initiiert, sondern erfolgt auf Veranlassung seitens der Empfangsstation.

Ein weiteres Beispiel soll aufzeigen, welche Möglichkeiten mit dem erfindungsgemäßen System gegeben sind, wenn statt der GSM-Hardware z.B. Inmarsat-C-Hardware installiert ist: Bei Flugzeugabstürzen stellt das Auffinden der Black Box oft ein schwieriges Problem dar. Die Black Box sendet ein relativ schwaches Signal aus, welches mühsam geortet werden muß. Beim Einsatz des erfindungsgemäßen Systems wäre der Impuls für die Aktivierung der Systemsteuerung beispielsweise ein Parameter, der sich aus der Flughöhe in Verbindung mit dem Signal "Fahrwerk nicht ausgefahren" ergibt, oder das Signal "May Day". Dieser Impuls aktiviert das Sicherheitsinformationssystem, welches fest mit der Black Box verbunden ist. Das Sicherheitsinformationssystem stellt auf der Basis Inmarsat-C eine Verbindung zu einer Leitstelle der Flugüberwachung her und übermittelt dann die Notrufmeldung und die Stammdaten des Flugzeugs sowie anschließend die momentanen Positionsdaten mit Hilfe eines GPS-Systems. Der entsprechend programmierte Mikrochip des Sicherheitsinformationssystems hält entweder die Verbindung mit der Empfangsstation oder wählt diese in vorgegebenen zeitlichen Intervallen wieder an und übermittelt die aktuellen Positionsdaten.

### Kurzbezeichnung der Zeichnung, in der zeigen:

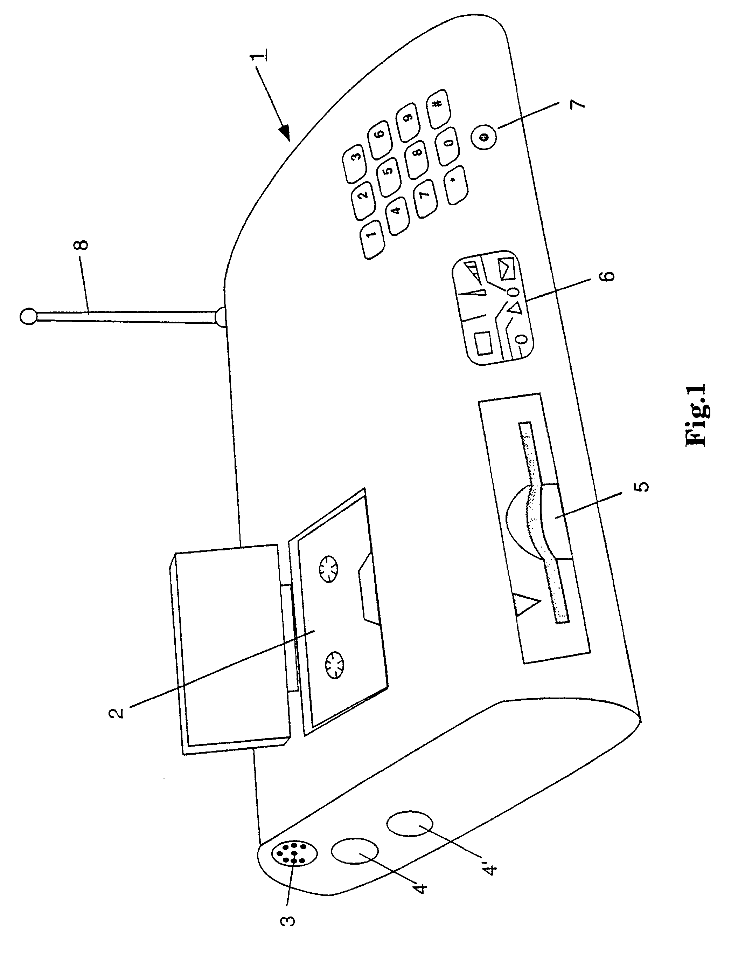

- Figur 1: die Aufsicht auf ein erfindungsgemäßes Sicherheitsinformationssystem und
- Figur 2: die Aufsicht auf ein erfindungsgemäßes Sicherheits informationssystem zur Personenüberwachung.

### Bevorzugte Ausführungsform der Erfindung:

Das dargestellte Sicherheitsinformationssystem besteht aus einem Gehäuse 1, mit einem Empfänger mit Eingangskanälen 4 und 4', einer Systemsteuerung, einer Sendestation mit einer Selbstwähleinheit und einer Antenne 8 sowie einer Aufnahme-Einheit mit Mikrofon bzw. Mikrofon-Anschluß 3 und Sprachspeicher 2, hier ein Tonband. Es ist in der Lage, aufgrund eines auslösenden Impulses, der über einen Eingangskanal 4 oder 4' empfangen wurde, einen Wählvorgang im GSM-Bereich selbständig einzuleiten.

Der auslösende Impuls wird entweder mittels eines in einen Eingangskanal eingesteckten Kabels als elektrischer Impuls oder auch drahtlos mittels eines geeigneten Sensors in das Gerät eingeleitet. Der Impuls aktiviert die Systemsteuerung und damit das gesamte System, welches bis zum Empfang des Impulses vollkommen ausgeschaltet war. Es ist damit kein stromsparender Stand-By-Betrieb erforderlich - das Sicherheitsinformationssystem benötigt in der Ruhephase keine Energie. Ausnahmen treten bei Verwendung von Sensoren auf, die zur Detektion mit Spannung versorgt sein müssen.

Der eingehende Impuls wird über einen Mikrochip verarbeitet und aktiviert die in der Systemsteuerung oder in der Sendestation integrierte GSM-Hardware 5. In das Gerät, insbesondere in diese Hardware, wurde bei Inbetriebnahme vom Nutzer die Software in Form einer weltweit gebräuchlichen SIM-Mobiltelefonkarte eingeschoben. Damit kann das Sicherheitsinformationssystem an GSM-Kommunikationssystemen teilnehmen. Der Nutzer hat bei Inbetriebnahme, gesteuert von der SIM-Software, über eine Tastatur 7 und ein Display 6 eine oder mehrere Zielrufnummern in den Speicher eingegeben.

Der Nutzer hat mittels des Mikrofons und des Sprachspeichers 2 einen oder mehrere Ansagetexte eingegeben, welche einem auslösenden Impuls zugeordnet sind und nach Verbindungsherstellung der Empfangsstation übermittelt werden. Ansagetexte sowie Zielrufnummern können jederzeit geändert werden.

Nach Eingang eines auslösenden Impulses stellt das Sicherheitsinformationssystem automatisch eine Verbindung zu der oder den Zielrufnummern her und gibt die vorgespeicherten Signale, welche dem Impuls entsprechen, weiter, sobald eine Verbindung zustande kommt. Die übermittelte Imformation besteht in der einfachsten Weise aus einem Signalton, jedoch sind auch kurze, von einem Tonband oder Voice-Chip abgerufene akustische Informationen oder digital übertragene Daten möglich, wobei letztere auf einem Display an der Empfangsstation, soweit vorhanden, dargestellt werden, z.B. auf dem Display eines Mobiltelefons.

Die Verbindung kann nach Abruf der gespeicherten Informationen für eine einoder zweiseitige Kommunikation freigeschaltet werden, wobei das Sicherheitsinformationssystem wie ein Mobiltelefon zu verwenden ist. Es muß zur zweiseitigen Kommunikation neben dem Mikrofon bzw. Mikrofoneingang 3 noch einen Lautsprecherausgang aufweisen, der hier nicht dargestellt ist.

### Übersicht über die Einsatzmöglichkeiten eines derartigen Geräts:

| | | |
|---|---|---|
| Zu überwachendes Objekt | Notruf an | Voice Box Info über |
| Ausstellungen, Messestände | Sicherheitsdienst | Halle, Stand, Firma |
| KFZ auf Parkplatz/ Parkhaus | Parkhausbetreiber | KFZ-Daten, Standplatz |
| KFZ Überland | Polizei | KFZ-Daten, Stadt, Weg |
| Wohnwagen auf Campingplatz | Platzwart | Eigentümer, Standplatz |
| Boot | Hafenleitung | Bootsname, Halter, Liegeplatz |
| Container, Gerät auf Baustelle | Bauleitung | Ort, Gerät |
| Bergsteiger | Bergrettung | Name, Tag, Route |

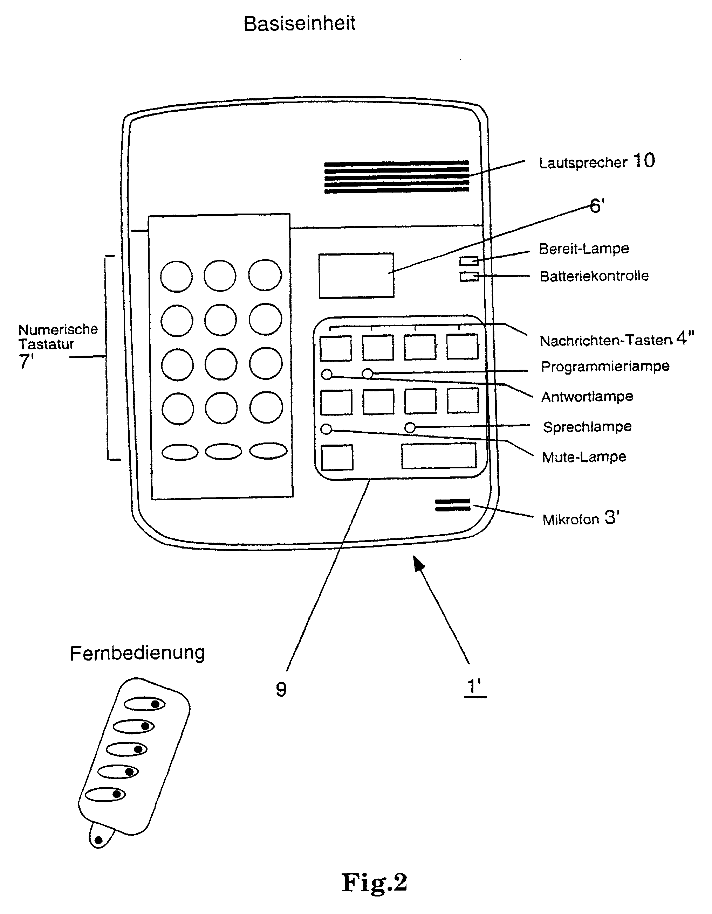

In Figur 2 ist ein Sicherheitsinformationssystem dargestellt, welches zur Personenüberwachung gedacht ist, insbesondere zum automatischen Wählen von Rufnummern im Notfall. Das Gerät besteht aus einem Gehäuse 1' mit den oben beschriebenen inneren Komponenten sowie Display 6', numerische Tastatur 7' und Mikrofon 3'. Weiterhin weist das dargestellte Gerät eine Bedienungs-Tastatur 9 auf, die das Programmieren des Geräts unterstützt sowie Tasten zur Abgabe auslösender Signale enthält. Die Eingangskanäle des Empfängers sind bei diesem Beispiel vier Nachrichten-Tasten 4" auf der Bedienungs-Tastatur 9, die vom Benutzer direkt manuell betätigt werden können. Die entsprechenden auslösenden Signale können alternativ auch mit einer Fernbedienung abgegeben werden.

Nachdem das Gerät entsprechend dem auslösenden Impuls eine eingespeicherte Rufnummer angewählt und eine dementsprechende Nachricht, gegebenenfalls mit einem zusätzlichen Alarmsignal, abgesendet hat, wird automatisch für eine gewisse Zeitspanne eine Sprechverbindung aktiviert, so daß der Benutzer mit dem angerufenen Teilnehmer sprechen kann. Dazu weist das Gerät neben dem Mikrofon einen Lautsprecher 10 auf. Gegebenenfalls wird die Nachricht wiederholt und/oder werden nach der ersten Rufnummer noch weitere ausgewählte und gespeicherte Nummern angewählt, wobei den Teilnehmern die gleiche Nachricht übermittelt wird.

### Gewerbliche Anwendbarkeit:

Der Gegenstand der Erfindung ist überall dort einsetzbar, wo mittels eines mobilen Sicherheitsinformationssystems bestimmte Objekte, wie Fahrzeug oder Campingwagen, oder Plätze oder Räume überwacht werden sollen. Die Nützlichkeit der Erfindung liegt insbesondere darin, daß das Sicherheitsinformationssystem ist mobiltelefonähnlich aufgebaut, gegebenenfalls in einem Mobiltelefon integriert ist, und wird zur Teilnahme an GSM-Kommunikation dadurch befähigt, daß eine Mobiltelefonkarte mit entsprechende Software, z.B. eine weltweit gebräuchliche SIM-Karte, in das Sicherheitsinformationssystem eingesteckt wird.

## Patentansprüche

1. Mobiles Sicherheitsinformationssystem, das einen Empfänger zur Detektion wenigstens einer Startbedingung, eine Systemsteuerung, eine Sendestation mit Selbstwähleinheit zur Teilnahme an GSM-Kommunikation, sowie eine Aufnahmeeinheit und einen Sprachspeicher , nämlich Tonband oder Voice-Chip, aufweist, wobei der Empfänger einen auslösenden Impuls detektiert und daraufhin die Systemsteuerung aktiviert, welche ein dem auslösenden Impuls entsprechendes Übertragungsprogramm startet, bestehend aus automatischer Anwahl wenigstens einer einprogrammierten Rufnummer durch die Sendestation und nach Verbindungsherstellung Übermittlung von Signalen, wie Piepton oder gespeicherter Ansagetext, die dem auslösenden Impuls entsprechen, an die entsprechende Empfangsstation, und eines ortsabhängigen Positionssignals sowie Freischaltung der Verbindung zur Übermittlung von zu diesem Zeitpunkt im Bereich des Sicherheitsinformationssystems erzeugten akustischen Signalen an die Empfangsstation, wobei diese Signale von der Aufnahme-Einheit empfangen und über die Sendestation an die Empfangsstation gesendet werden,
**dadurch gekennzeichnet,**
**dass** das Sicherheitsinformationssystem zur Teilnahme an GSM-Kommunikation ausgelegt ist und die Sendestation GSM-spezifische oder Inmarsat-C-spezifische Hardware enthält, wobei die Sendestation mobiltelefonähnlich aufgebaut ist und mittels einer in das Sicherheitsinformationssystem einsteckbaren Mobiltelefonkarte mit entsprechender Software, z.B. SIM-Karte, an der GSM-Kommunikation teilnimmt und dass der Empfänger eine Mehrzahl von Eingangskanälen für verschiedenartige Impulse aufweist, so dass er eine Mehrzahl von Startbedingungen in Form von unterschiedlichen auslösenden Impulsen zu unterscheiden imstande ist, wobei der Systemsteuerung eine Mehrzahl von Übertragungsprogrammen zur Verfügung steht, welche vom Benutzer einem auslösenden Impuls bzw. einem der Eingangskanäle zugeordnet werden und durch Eingabe einer oder mehrerer Rufnummern sowie eines Ansagetextes beliebig oft modifizierbar sind.

2. Sicherheitsinformationssystem nach Anspruch 1, **dadurch gekennzeichnet,**
**dass** die Eingangskanäle Taster oder akustische oder optische und/oder Infrarot-Sensoren und/oder Einsteckbuchsen für elektrische Kontakte sind, so dass die verschiedenartigen auslösenden Impulse solche aus manueller Betätigung oder akustische oder optische, wie Infrarot-Signale, oder Spannungspulse sind.

3. Sicherheitsinformationssystem nach Anspruch 1, **dadurch gekennzeichnet,**
**daß** zur Aktivierung des Sicherheitsinformationssystems bzw. dessen Systemsteuerung als Startbedingung ein beliebiges, einstellbares Signal oder eine Mehrzahl derartiger Signale dient, wonach nach dem Eingang eines solchen Signals das Übertragungsprogramm aktiviert wird.

4. Sicherheitsinformationssystem nach einem der vorherigen Ansprüche,
**dadurch gekennzeichnet, daß** zur Modifizierung des Übertragungssprogramms durch die Empfangsstation die Systemsteuerung nach Verbindungsherstellung ein Steuersignal von der Empfangsstation empfängt, welches den aktuellen Ablauf des Übertragungsprogramms zu ändern imstande ist.

5. Sicherheitsinformationssystem nach Anspruch 4, **dadurch gekennzeichnet,**
**daß** das Übertragungssprogramm dahingehend veränderbar ist, daß eine einoder zweiseitige direkte Kommunikation zwischen Sende- und Empfangsstation stattfindet.

6. Sicherheitsinformationssystem nach Anspruch 4 oder 5,
**dadurch gekennzeichnet,**
**daß** der Ablauf des Übertragungsprogramms von der Empfangsstation modifizierbar ist, wobei an der Empfangsstation, zum Beispiel durch Wahltastendruck, ein Steuersignal erzeugt und während der bestehenden Verbindung zum Sicherheitsinformationssystem übertragen wird, und daß das Steuersignal dann temporär den Ablauf des Übertragungsprogramms ändert, beispielsweise der Ansagetext wiederholt oder der Abbruch des Übertragungsprogramms verhindert oder die Verbindung für eine direkte Sprechverbindung freigeschaltet wird, und damit das Übertragungsprogramm und die Funktionsweise des Sicherheitsinformationssystems an die aktuelle Situation angepaßt werden.

7. Sicherheitsinformationssystem nach Anspruch 1, **dadurch gekennzeichnet,**
**daß** es einen GPS-Sensor enthält, welcher einmalig oder in regelmäßigen Zeitintervallen die Positionsdaten des Sicherheitsinformationssystems ermittelt, wobei die Sendestation der Empfangsstation die jeweiligen Positionsdaten übermittelt.

8. Sicherheitsinformationssystem nach Anspruch 1, **dadurch gekennzeichnet,**
**daß** es von einem beliebigen Telefonanschluß anrufbar ist, wobei der Zustand eines oder mehrerer Empfangskanäle abfragbar ist.

9. Sicherheitsinformationssystem nach Anspruch 1, **dadurch gekennzeichnet**,
**dadurch gekennzeichnet, daß** es in einem Mobiltelefon integriert ist und einen Lautsprecher und/oder ein Display aufweist und von der Empfangsstation übermittelte Signale wiederzugeben imstande ist.

10. Sicherheitsinformationssystem nach Anspruch 1, **dadurch gekennzeichnet**,
**dadurch gekennzeichnet, daß** weitere, in die Sendestation mit Selbstwähleinheit einprogrammierte Rufnummern automatisch angewählt werden, falls die erste angewählte Verbindung nicht zustande kommt.

11. Sicherheitsinformationssystem nach Anspruch 1, **dadurch gekennzeichnet,**
**dass** dasselbe einen mechanischen Schalter oder eine mechanische Taste zur Betätigung als Notruf aufweist.

## Claims

1. Mobile security information system having a receiver for the detection of at least one starting condition, one system control, one transmitting station with an auto-dialing unit for participation in GSM communication as well as a recording unit and a speech memory, namely, an audio tape or a voice chip, whereby the receiver detects a triggering pulse in response to which it activates the system control which starts a transmission program corresponding to the triggering pulse, consisting of an automatic dialing of at least one programmed phone number by the transmitting station and, after establishing the connection, conveying signals - such as a beep or recorded message - corresponding to the triggering pulse, to the appropriate receiving station, and consisting of a location-dependent position signal as well as establishing the connection in order to convey acoustic signals generated at this point in time in the area of the security information system to the receiving station, whereby these signals are received by the receiving unit and are transmitted via the transmitting station to the receiving station, **characterized in that** the security information system is configured to participate in GSM communication and the transmitting station contains GSM-specific or Inmarsat-C-specific hardware, whereby the transmitting station is structured similar to a cell phone, and the transmitting station participates in the GSM communication by means of a cell phone card with the appropriate software, e.g. SIM card, that can be inserted into the security information system and **in that** the receiver has a plurality of input channels for various kinds of pulses, so that it is capable of distinguishing a plurality of starting conditions in the form of different triggering pulses, whereby the system control has access to a plurality of transmission programs which are assigned by the user to a triggering pulse or to one of the input channels and which can be modified as often as desired by inputting one or more phone numbers as well as a recorded message.

2. The security information system according to Claim 1, **characterized in that** the input channels are keys or acoustic or optical and/or infrared sensors and/or plug-in bushings for electric contacts, so that the various types of triggering pulses are those from manual actuation or from acoustic or optical pulses, such as infrared signals, or voltage pulses.

3. The security information system according to Claim 1, **characterized in that** in order to activate the security information system or its system control, a random, adjustable signal or a plurality of such signals serves as the starting condition, subsequent to which, after the input of such a signal, the transmission program is activated.

4. The security information system according to one of the preceding claims, **characterized in that**, in order to modify the transmission program by the receiving station, after the connection has been established, the system control receives from the receiving station a control signal that is capable of changing the current sequence of the transmission program.

5. The security information system according to Claim 4, **characterized in that** the transmission program can be changed in such a way that a one-way or two-way direct communication takes place between the transmitting station and the receiving station.

6. The security information system according to Claim 4 or 5, **characterized in that** the sequence of the transmission program can be modified by the receiving station, whereby, at the receiving station, a control signal is generated, for example, by pressing a dial button, and is transmitted to the security information system during the existing connection, and **in that** the control signal then temporarily changes the sequence of the transmission program, for example, repeats the recorded message or prevents the interruption of the transmission program or establishes the connection for a direct speech connection, and thus the transmission program and the mode of operation of the security information system are adapted to the current situation.

7. The security information system according to Claim 1, **characterized in that** it contains a GPS sensor which determines the positional data of the security information system one time or at regular time intervals, whereby the transmitting station conveys the appertaining positional data to the receiving station.

8. The security information system according to Claim 1, **characterized in that** it can be called from any telephone connection, whereby the state of one or more receiving channels can be queried.

9. The security information system according to Claim 1, **characterized in that** it is integrated into a cell phone and has a loudspeaker and/or a display and is capable of reproducing signals transmitted by the receiving station.

10. The security information system according to Claim 1, **characterized in that** additional phone numbers programmed into the transmitting station are automatically dialed by means of an auto-dialing unit if the first selected connection is not established.

11. The security information system according to Claim 1, **characterized in that** it has a mechanical switch or a mechanical key for actuation as an emergency call button.

## Revendications

1. Système mobile pour informations relatives à la sécurité faisant état d'un récepteur pour la détection d'au moins une condition de lancement, d'une commande de système, d'un poste émetteur avec unité de sélection automatique pour prendre part à une communication GSM, ainsi que d'une unité d'enregistrement et d'une mémoire vocale, à savoir une bande magnétique ou une puce vocale, le récepteur détectant une impulsion de déclenchement à la suite de quoi il active la commande du système qui lance un programme de transmission correspondant à l'impulsion de déclenchement, consistant en la sélection automatique par le poste émetteur d'au moins un numéro d'appel programmé et, la communication une fois établie, par la transmission au poste récepteur correspondant de signaux tels qu'un signal bip ou un texte d'annonce enregistré qui correspondent à l'impul-sion de déclenchement et la transmission d'un signal de position en fonction du lieu, ainsi que la libération de la ligne pour la transmission au poste récepteur des signaux acoustiques produits à ce moment dans la zone du système pour informations relatives à la sécurité, ces signaux étant reçus par l'unité d'enregistrement et émis au poste récepteur via le poste émetteur, **caractérisé en ce que**
le système pour informations relatives à la sécurité est conçu pour prendre part à la communication GSM et le poste émetteur est doté d'une configuration matérielle dédiée GSM ou dédiée Inmarsat-C, le poste émetteur ayant une structure similaire à un téléphone mobile et prenant part à la communication GSM au moyen d'une carte de téléphonie mobile insérable avec logiciel dédié correspondant, comme une carte SIM, par exemple, et **en ce que** le récepteur fait état de plusieurs canaux d'entrée pour des impulsions de diverse nature, de manière à être capable de différencier une pluralité de conditions de lancement sous forme de diverses impulsions de déclenchement, la commande du système disposant d'un grand nombre de programmes de transmission qui peuvent être assignés par l'utilisateur à une impulsion de déclenchement ou à l'un des canaux d'entrée et qui peuvent être modifiés aussi souvent que l'on veut par l'entrée d'un ou de plusieurs numéros d'appel ou d'un texte d'annonce.

2. Système pour informations relatives à la sécurité selon la revendication 1, **caractérisé en ce que** les canaux d'entrée sont des touches ou des détecteurs acoustiques ou optiques et/ou à infrarouges et/ou des prises femelles pour contacts électriques, de sorte que les différentes impulsions de déclenchement sont celles qui proviennent d'un actionnement manuel ou des signaux acoustiques ou optiques, tels que des signaux à infrarouges, ou des pulsions de tension.

3. Système pour informations relatives à la sécurité selon la revendication 1, **caractérisé en ce que** n'importe quel signal programmable ou plusieurs signaux de ce genre servent à l'activation du système pour informations relatives à la sécurité ou de la commande du système, le programme de transmission étant activé après l'entrée d'un tel signal.

4. Système pour informations relatives à la sécurité selon l'une des revendications précédentes, **caractérisé en ce que**, pour la modification du programme de transmission par le poste récepteur, la commande du système reçoit du poste récepteur, après établissement de la ligne, un signal de commande qui est capable de modifier le déroulement en cours du programme de transmission.

5. Système pour informations relatives à la sécurité selon la revendication 4, **caractérisé en ce que** le programme de transmission est en ce sens modifiable qu'une communication ou unidirectionnelle ou bidirectionnelle directe a lieu entre le poste émetteur et le poste récepteur.

6. Système pour informations relatives à la sécurité selon l'une des revendications 4 ou 5, **caractérisé en ce que** le déroulement du programme de transmission est modifiable à partir du poste récepteur, à l'occasion de quoi, au niveau du poste récepteur est produit un signal de commande, par exemple par pression d'une touche de sélection, et transmis pendant que la ligne est établie, au système pour informations relatives à la sécurité, et **en ce que** le signal de commande modifie alors temporairement le déroulement du programme de transmission, par exemple répète le texte d'annonce ou empêche l'interruption du programme de transmission, ou libère la ligne pour une communication parlée directe et de ce fait, le programme de transmission et le mode opératoire du système pour informations relatives à la sécurité sont adaptés à la situation actuelle.

7. Système pour informations relatives à la sécurité selon la revendication 1, **caractérisé en ce que** ledit système comporte un capteur GPS qui détermine une fois pour toutes ou à des intervalles de temps réguliers les données de position du système pour informations relatives à la sécurité, le poste émetteur transmettant au poste récepteur les données de position respectives.

8. Système pour informations relatives à la sécurité selon la revendication 1, **caractérisé en ce que** ledit système peut être appelé à partir de n'importe quelle ligne téléphonique, l'état d'un ou de plusieurs canaux récepteurs pouvant être interrogé.

9. Système pour informations relatives à la sécurité selon la revendication 1, **caractérisé en ce que** ledit système est intégré dans un téléphone mobile et présente un haut-parleur et/ou un afficheur et est en mesure de reproduire tous les signaux transmis par le poste récepteur.

10. Système pour informations relatives à la sécurité selon la revendication 1, **caractérisé en ce que** d'autres numéros d'appel programmés dans le poste émetteur avec unité de sélection automatique sont automatiquement sélectionnés au cas où la ligne pour le premier appel sélectionné ne peut être établie.

11. Système pour informations relatives à la sécurité selon la revendication 1, **caractérisé en ce que** ledit système présente un interrupteur mécanique ou une touche mécanique pour être actionnée comme appel de secours.
